# EUROPEAN PATENT SPECIFICATION

(11) **EP 1 197 137 B1**
(45) Date of publication and mention of the grant of the patent: **17.11.2004**
(21) Application number: 01610078.6
(22) Date of filing: 12.07.2001
(51) Int. Cl.: A01G 9/10

(54) **A method of growing two or more plants for the development of a composite or combined plant structure and a plant structure**
Methode zur Zucht von zwei oder mehr Pflanzen mit dem Ziel, eine kombinierte Pflanzenstruktur zu erhalten, und Pflanzenstruktur
Méthode de croissance de plantes afin de créer une structure composite des plantes et structure de plantes

(43) Date of publication of application: 17.04.2002
(73) Proprietor: Legro Gartneri A/S, 2690 Karlslunde (DK)
(72) Inventor: Hogholt, Niels, 2690 Karlslunde (DK); Hogholt, Lars, 2690 Karlslunde (DK)
(74) Representative: Tetens, Erik

(56) References cited:
- EP-A- 0 981 950
- GB-A- 2 236 649
- US-A- 5 382 403
- US-A- 5 759 225
- PATENT ABSTRACTS OF JAPAN vol. 1999, no. 05, 31 May 1999 (1999-05-31) & JP 11 042016 A (NAKADA TAMOTSU;UENO SHOICHI; SHIMIZU KAZUYA; TACHIKAWA KIYOSHI; KIKAZA), 16 February 1999 (1999-02-16)
- PATENT ABSTRACTS OF JAPAN vol. 1997, no. 05, 30 May 1997 (1997-05-30) & JP 09 023711 A (YANMAR AGRICULT EQUIP CO LTD), 28 January 1997 (1997-01-28)

## Description

The present invention relates to a method of growing two or more plants for the development of a composite or combined plant structure and a plant structure including two plants having leaves mingled together in a composite structure.

Within the field of agriculture and horticulture plants such as herbs or aromatic plants have been grown in separate or individual pots intended for the sale to a consumer. Examples of herbs or aromatic plants are: salad, chives, parsley, sage, basil, rosemary, oregano, spearmint, and lemon balm. For some intentional applications by the user, a need may exist for having several plants available for specific applications such as several individual aromatic plants. Previously, the user has only been presented to the individual aromatic plant supplied in a single pot. Experiments have been performed by the applicant for the supply of salad structures in which different species of salads such as salad having red and green leaves have been made and through these experiments, the technique according to the present invention has been developed. According to these experiments, the applicant company has realised that the parallel growth of different plants or different species of plants necessitate certain precautions for preventing the one plant from growing to an excessive size in comparison with the other plant or in other words provide a composite plant structure having two individual plants constituting the elements or parts of the composite plant structure which individual plants are of substantially the same size.

The present invention in greater details is relating to a method of growing two or more plants for the development for a composite or combined plant structure including leaves of said two or more plants mingled together in a composite structure which method according to the present invention comprises: providing a pot including a growth medium, preferably soil, sowing in said pot a first seed of a first plant of said two or more plants selected from a specific species of said first plant exhibiting a first specific growth rate for the development of said first plant of a specific size within a specific period of time, sowing in said pot a second seed of a second plant of said two or more plants selected from a specific specie of said second plant exhibiting a second specific growth rate for the development of said second plant of said specific size within a specific period of time, the sowing of said first seed and the sowing of said second seed being performed at the same time provided said first growth rate be identical to said second growth rate, or alternatively the sowing of said first seed being delayed relative to the time of sowing of said second seed provided said first growth rate be higher than said second growth rate for allowing said first and second plants to develop at the same time to said specific size, or further alternatively the sowing of said first seed and the sowing of said second seed being performed at the same time, however the growing of said first plant being inhibited through permanently or periodically screening off said first plant during its growth, provided said first growth rate be higher than said second growth rate, for inhibiting the development of said first plant to said specific size until said second part has grown into said specific size.

According to the teachings of the present invention, the parallel growth of two different plants or different species of plants is readily accomplished provided the growth rates of the two plants or the species of the two plants chosen be carefully monitored and the growth rates be determined for allowing the time of sowing of the two individual plants to be determined or alternatively for allowing the growth of one of the plants to be controlled through inhibition of the growth.

According to a particular aspect of the present invention, it has been realised that the aeration of the plants, in particular the aeration of the soil surrounding the roots and the roots themselves and also the supply of water to the roots are mandatory to the growth of the plants and further important to the parallel growth as the aeration of the soil and also the supply of water to the soil not only from the surface of the soil may prevent the plants from developing differently due to difference in their growth conditions. In this context it has been realised that a pot made of sphagnum provides the advantageous aeration and humidity or water transfer capability to and from the soil in which the seeds have been sowed.

Apart from the aeration and humidity transfer capability of the sphagnum pot, the sphagnum pot itself as compared to plastic or tile pots provide the additional advantage that the pot itself is biologically degradable and may be used as compost together with the remainings of the plants themselves.

The sowing of the seeds themselves may in accordance with the techniques well known in the art per se be accomplished in accordance with two alternative techniques, namely by the application of the seeds on top of the soil being the growth medium or alternatively by injecting seed into the growth medium, preferably soil, by means of a injector sowing device. Provided the seeds or one of the seeds be positioned on top of the growth medium, preferably soil, an additional layer of a water evaporation inhibiting material such as a layer of clay is advantageously positioned on top of the seed or the seeds positioned or laid on the growth medium or the soil. The evaporation inhibiting material such as clay prevents as will be understood water from evaporating from the area below and surrounding the seed or the seeds providing excellent initial growth conditions for the seed or the seeds in question and thereby contributes to obtaining the parallel growth of the two plants from the two seeds as compared to a growing technique in which no water or evaporation inhibiting layer be applied on top of a seed laid on the growth medium or soil.

According to a particular aspect of the present invention, the two plants of salad plants, the one plant having red leaves and the other plant having green leaves. Alternatively, the plants may be herbs or crops such as aromatic plants, e.g. chives, parsley, sage, basil, rosemary, oregano, spearmint, and lemon balm.

The invention as stated above further relates to a plant structure including two plants having leaves mingled together in a composite structure which plant structure is produced by growth in accordance with the method according to the present invention.

The present invention is now to be further described with reference to the drawings in which
Figs. 1a, 1b and 1c are schematic and partly sectional views illustrating a first embodiment of a method according to the present invention of growing two plants in a pot for the production of a composite or combined plant,
Figs 2a, 2b and 2c are schematic and partly sectional views similar to the views of Figs. 1a, 1b and 1c illustrating a second embodiment of the method according to the present invention of growing a plurality of plants in a single pot for the production of a combined plant formation, and
Fig. 3a, 3b and 3c illustrate a third embodiment of the method according to the present invention of growing two or more plants in a single pot for the formation of a combined plant structure.

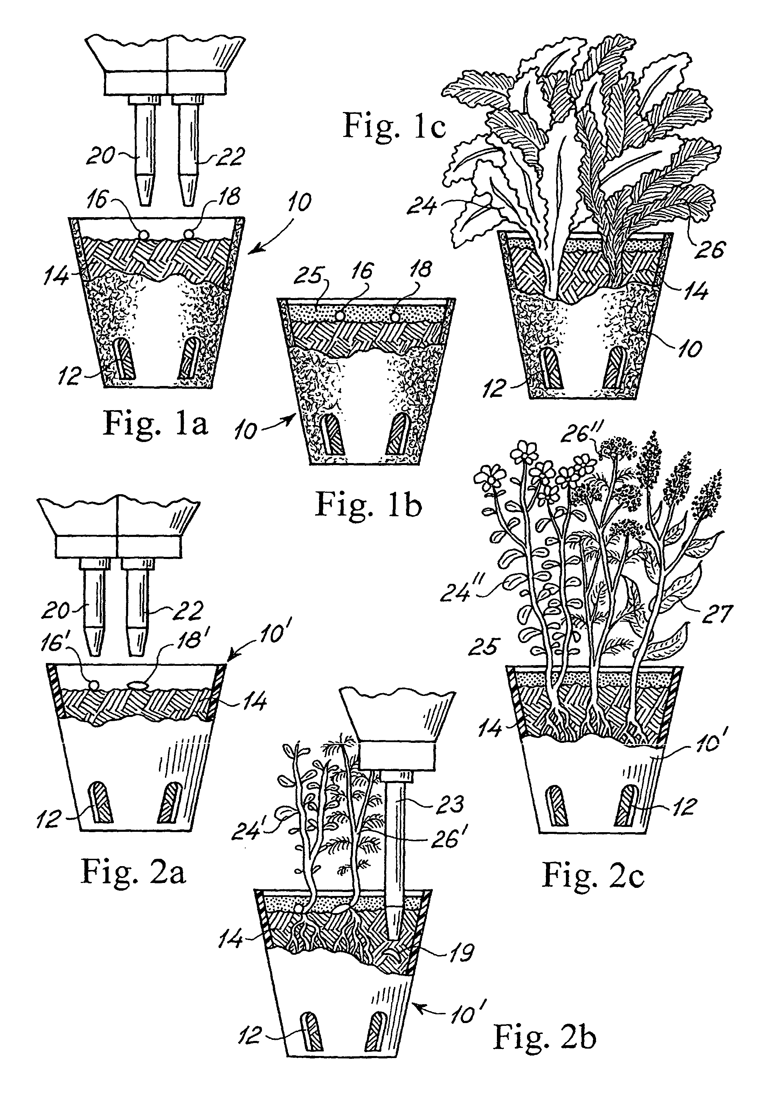

In Fig. 1a, a first step of a first embodiment of a method according to the present invention of growing two plants together for the development of a composite or combined plant structure in shown. In Fig. 1a, the reference numeral 10 designates a pot, preferably a pot made from sphagnum, i.e. a pot made from a biodegradable material. The sphagnum pot 10 is of a conventional conical configuration having a planar bottom and a plurality of apertures provided at the lower end of the pot one of which apertures is designated numeral 12. Within the interior of the pot 10 a growth substance, preferably soil is received which material is designated the reference numeral 14. Alternatively, certain growth materials such as mineral wool, substrates, etc. may be provided for the growth of the crops or plants to be grown within the pot. Preferably, a biodegradable and bio compatible growth medium such as soil is used for the growth of the crops or plants. As the pot 10 is made from sphagnum, the growth material being, preferably, soil is easily aerated through the pores of the sphagnum material of the pot. In addition, the apertures 12 allow the soil 14 received within the pot 10 to be aerated and further to allow water to be easily supplied to or drained from the soil 14.

For the positioning of two seeds 16 and 18 on the soil 14, a pair of ejector nozzles 20 and 22, respectively are positioned above the soil 14. The planting or sowing nozzles 20 and 22 are lowered towards the soil 14 and as the lower ends of the nozzles 20 and 22 are positioned at a specific height above the surface of the pot soil 10, a seed is expelled from each of the two nozzles 20 and 22.

In Fig. 1b, a second step of the first embodiment of the method according to the present invention of growing two plants together for the development of a composite or combined plant structure is shown. In Fig. 1b, a layer 15 of a finely granulate or particulate material such as a layer of clay is applied on top of the two seeds 16 and 18. The layer 25 of clay such as a layer of Vermakulit clay serves the purpose of establishing a humidity trap for preserving humidity trap for preventing excessive evaporation of water from the two seeds 16 and 18 which might else clause a retardation of the growth of the two plants to be developed from the two seeds 16 and 18.

The two seeds 16 and 18 shown in Fig. 1a and 1b are of different sorts, kinds or types, however selected so as to have substantially identical growth rates allowing the two plants grown from the two seeds 16 and 18 to develop simultaneously for the formation as shown in Fig. 1c of a combined plant structure the one originating from the seed 16 and being designated the reference numeral 24 and the other originating from the 18 and being designated the reference numeral 26, however being of substantially the same size. A particular aspect of the growth method according to the present invention and a specific aspect of the present invention itself is a combined salad having red and green salad leaves mingled together in a composite structure, however being composed by two individual plants originating from two seeds sowed simultaneously and grown parallel at the same growth rate as the two species have been chosen having substantially the same growth rate.

A further aspect of the growth method according to the present invention relates to the utilisation of the growing pot made from sphagnum as it is contemplated based on experiments which the applicant company has made that the pot has a major influence to the results in terms of reproducible growth rates since it is contemplated that the sphagnum pot provides an improved aeration and also humidity transfer to and from the seeds 16 and 18 and turn from the plants in particular the roots opf the plants developed from the seeds 16 and 18 thereby causing the development of the two plants to be uniformly and to a great extent independent of unpredictable and uncontrollable factors in relation to the aeration and transfer of humidity to and from the plant roots.

In Fig. 2a, 2b, and 2c, an alternative sowing technique is illustrated. Throughout the drawings identical reference numerals for the identical element or component are used whereas elements or components similar to a previously described element or component, respectively, however, differing from the previously described element or component is designated the same reference added a marking for identifying the difference to the previously described element or component.

In Fig. 2a, a pot 10' such as a plastics material pot is used for the growth of different species or plants. Two seeds 16' and 18' are sown simultaneously on the soil 16 by means of the seed dispensers 20 and 22 and then covered by a layer of clay as described above with reference to Fig. 2b. The two seeds 16' and 18' may constitute seeds for the growth of two different herbs or vegetables such as different aromatic plants. The two seeds 16' and 18', however, are chosen in accordance with the technique described above with reference to Figs. 1a, 1b and 1c as the two herbs or aromatic plants originating from the seeds 16' and 18' may grow at substantially the same rate for the formation of two plants 24' and 26' shown in Fig. 2b illustrating the same pot 10' as shown in Fig. 2a, however, after a period of time during which the two seeds 16' and 18' have developed the two plants 24' and 26', respectively.

In Fig. 2b, a further seed dispenser 23 differing from the dispensers 20 and 22 shown in Figs. 1a and 2a is shown for the dispensing of a further seed 19. The seed 19 is specifically sowed in the soil 14 at a time allowing the seed 19 to develop a plant 27 of the size shown in Fig. 2c at the same time as the plants 24' and 26' shown in Fig. 2b have grown to the sizes shown in Fig. 2c and indicated by the reference numerals 24" and 26", respectively.

According to the technique shown in Figs. 2a-2c, the time of sowing the additional seed is chosen so as to allow the later sown seed to develop to a final size corresponding to the plants originating from the previously sowed seed or seeds providing a composite plant structure which two or more herbs or species are presented, mingled and combined together having specifically and intentionally grown sizes, preferably identical or substantially the same sizes.

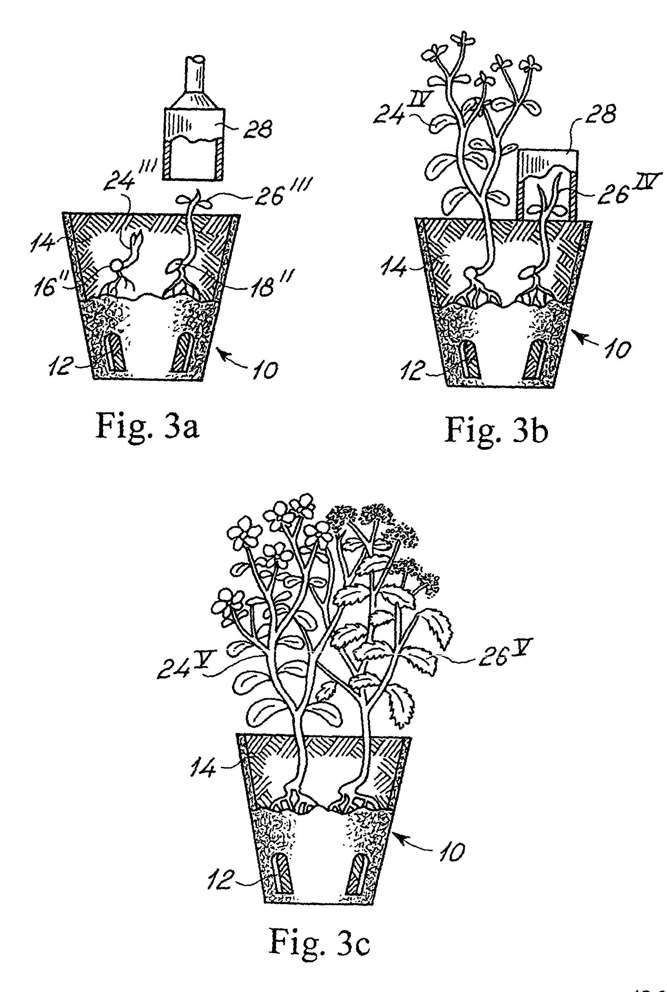

In Figs. 3a, 3b, and 3c, a further technique of establishing parallel growth of different herbs or plants is shown. In Fig. 3a, two seeds 16" and 18" of different species of plants have previously been sowed and have started the growth of two different plants 24"' and 26"', respectively, within the soil 14 received in the pot 10. As illustrated in Fig. 3a, the plant 26"' is growing far more swiftly, as compared to the plant 24"' and therefore provided the two plants 24"' and 26"' were simply allowed to grow freely, the plant 26"' would develop a plant far larger than the plant originating from the plant 24"'. For decelerating or inhibiting the growth of the plant 26"', a screen 28 is used and positioned periodically or permanently inhibiting the growth of the plant 26"'.

In Fig. 2b, the plant 24"' has developed into a fairly large plant 24^{IV} whereas the plant 26"' due to the growth inhibition provided by the screen 28 has only developed into the smaller sized plant 26^{IV}. At the time shown in Fig. 3b, the screen 28 is removed, and the plant 26^{IV} being a swiftly growing plant is allowed to freely grow resulting in as illustrated in Fig. 3c the growth into a plant 26^{V} having a size substantially identical to the size of the plant 24^{V} originating from the plant 24I^{V}.

Although the three techniques of parallel growth including the selection of specific species having substantially the same growth period and/or rate, including the delayed sowing of a fast growing species and the inhibition of growth of a fast growing species have been described above with reference to three different embodiments, it is contemplated that the above described techniques may readily be combined by a person having ordinary skill in the art. Further it is contemplated that the parallel growth technique illustrated above may be used in connection with a variety of plants including herbs and aromatic plants, etc. such as salad, chives, parsley, sage, basil, rosemary, oregano, spearmint, and lemon balm.

## Claims

1. A method of growing two or more plants for the development of a composite or combined plant structure including leaves of said two or more plants mingled together in a composite structure, comprising:
providing a pot including a growth medium, preferably soil,
sowing in said pot a first seed of a first plant of said two or more plants selected from a specific species of said first plant exhibiting a first specific growth rate for the development of said first plant of a specific size within a specific period of time,
sowing in said pot a second seed of a second plant of said two or more plants selected from a specific specie of said second plant exhibiting a second specific growth rate for the development of said second plant of said specific size within a specific period of time,
the sowing of said first seed and the sowing of said second seed being performed at the same time provided said first growth rate be identical to said second growth rate, or alternatively
the sowing of said first seed being delayed relative to the time of sowing of said second seed provided said first growth rate be higher than said second growth rate for allowing said first and second plants to develop at the same time to said specific size, or further alternatively
the sowing of said first seed and the sowing of said second seed being performed at the same time, however the growing of said first piant being inhibited through permanently or periodically screening off said first plant during its growth, provided said first growth rate be higher than said second growth rate, for inhibiting the development of said first plant to said specific size until said second part has grown into said specific size.

2. The method according to claim 1, said pot being a sphagnum pot for the provision of a growth pot exhibiting aeration and humidity transfer capability.

3. The method according to any of the claims 1 and 2, said first and/or said second seed being sowed on top of said growth medium, preferably soil, included in said pot, and the method further comprising the step of applying a layer of a water evaporation inhibiting layer such as a layer of clay on top of said first seed and/or on top of said second seed, respectively.

4. The method according to any of the claims 1-3, said second seed being sowed by injecting said seed into the growth medium, preferably soil, by means of an injector sowing device.

5. The method according to any of the claims 1-4, said first and second plants being salad plants having leaves of different colours, preferably red and green coloured leaves.

6. The method according to any of the claims 1-4, the plants being selected from herbs or crops such as aromatic plants, e.g.: salad, chives, parsley, sage, basil, rosemary, oregano, spearmint, and lemon balm.

7. A plant structure including two plants having leaves mingled together in a composite structure, said composite or combined plant structure being grown in accordance with the method according to any of the preceding claims.

## Patentansprüche

1. Verfahren zur Züchtung von zwei oder mehreren Pflanzen zur Entwicklung einer gemischten oder kombinierten Pflanzenstruktur, einschließlich Blätter der zwei oder mehreren Pflanzen, die in einer Kombinationsstruktur miteinander vermischt sind, welches umfasst:
Bereitstellen eines Topfes, einschließlich eines Wachstumsmediums, vorzugsweise Erde,
Aussäen einer ersten Saat einer ersten Pflanze der zwei oder mehreren Pflanzen, ausgewählt aus einer spezifischen Sorte der ersten Pflanze, die eine erste spezifische Wachstumsgeschwindigkeit für die Entwicklung der ersten Pflanze zu einer spezifischen Größe innerhalb eines spezifischen Zeitraumes aufweist, in dem Topf,
Aussäen einer zweiten Saat einer zweiten Pflanze der zwei oder mehreren Pflanzen, ausgewählt aus einer spezifischen Sorte der zweiten Pflanze, welche eine zweite spezifische Wachstumsgeschwindigkeit für die Entwicklung der zweiten Pflanze zu der spezifischen Größe innerhalb eines spezifischen Zeitraumes aufweist, in dem Topf,
Aussäen der ersten Saat und Aussäen der zweiten Saat, welches zur selben Zeit durchgeführt wird, vorausgesetzt, die erste Wachstumsgeschwindigkeit ist identisch zu der zweiten Wachstumsgeschwindigkeit, oder alternativ Aussäen der ersten Saat, welches relativ zum Aussäen der zweiten Saat verzögert wird, vorausgesetzt, die erste Wachstumsgeschwindigkeit ist höher als die zweite Wachstumsgeschwindigkeit, damit ermöglicht wird, dass sich die ersten und zweiten Pflanzen zur selben Zeit zu der spezifischen Größe entwickeln, oder des Weiteren alternativ,
Aussäen der ersten Saat und Aussäen der zweiten Saat, welches zur selben Zeit durchgeführt wird, wobei jedoch das Wachsen der ersten Pflanze durch ständiges oder periodisches Abblenden der ersten Pflanze während ihres Wachstums gehemmt wird, vorausgesetzt, die erste Wachstumsgeschwindigkeit ist höher als die zweite Wachstumsgeschwindigkeit, zum Hemmen der Entwicklung der ersten Pflanze zu der spezifischen Größe, bis der zweite Teil zu der spezifischen Größe gewachsen ist.

2. Verfahren nach Anspruch 1, wobei der Topf ein Torfmulltopf zum Bereitstellen eines Wachstumstopfes ist, der die Fähigkeit zur Belüftung und zur Übertragung von Feuchtigkeit aufweist.

3. Verfahren nach einem der Ansprüche 1 und 2, wobei die erste und/oder zweite Saat auf der Oberfläche des Wachstumsmediums, vorzugsweise Erde, ausgesät wird, welches in dem Topf beinhaltet ist, und wobei das Verfahren des Weiteren die Schritte des Auftragens einer Schicht einer wasserverdunstungshemmenden Schicht, wie beispielsweise eine Lehmschicht, auf die Oberfläche der ersten Saat und/oder auf die Oberfläche der zweiten Saat, umfasst.

4. Verfahren nach einem der Ansprüche 1 bis 3, wobei die zweite Saat ausgesät wird, indem die Saat mit Hilfe einer Einspritz-Sävorrichtung in das Wachstumsmedium, vorzugsweise Erde, gespritzt wird.

5. Verfahren nach einem der Ansprüche 1 bis 4, wobei die ersten und zweiten Pflanzen Salatpflanzen sind, die Blätter mit unterschiedlichen Farben, vorzugsweise rot und grün gefärbte Blätter, haben.

6. Verfahren nach einem der Ansprüche 1 bis 4, wobei die Pflanzen aus Kräutern oder Kulturpflanzen wie beispielsweise aromatischen Pflanzen ausgewählt werden, z.B. Salat, Schnittlauch, Petersilie, Salbei, Basilikum, Rosmarin, Oreganum, Grüne Minze und Zitronenmelisse.

7. Pflanzenstruktur, zwei Pflanzen aufweisend, die Blätter haben, welche in einer Kombinationsstruktur miteinander vermischt sind, wobei die zusammengesetzte oder kombinierte Pflanzenstruktur gemäß dem Verfahren nach einem der vorhergehenden Ansprüche gezüchtet wird.

## Revendications

1. Méthode de croissance de plantes afin de créer une structure composite des plantes comportant des feuilles desdites plantes entremêlées en une structure composite, comprenant:
la fourniture d'un pot contenant un agent de croissance, préférablement du terreau,
le semis dans ledit pot d'une première graine issue d'une première plante parmi lesdites plantes, sélectionnée à partir d'une espèce spécifique de ladite première plante faisant preuve d'une première vitesse de croissance spécifique pour le développement de ladite première plante d'une grandeur spécifique dans l'espace d'une période de temps spécifique,
le semis dans ledit pot d'une deuxième graine issue d'une deuxième plante parmi lesdites plantes, sélectionnée à partir d'une espèce spécifique de ladite deuxième plante faisant preuve d'une deuxième vitesse de croissance spécifique pour le développement de ladite deuxième plante de ladite grandeur spécifique dans l'espace d'une période de temps spécifique,
le semis de ladite première graine et le semis de ladite deuxième graine étant effectués en même temps au cas où ladite première vitesse de croissance soit identique à ladite deuxième vitesse de croissance, ou, alternativement
le semis de ladite première graine étant retardé relatif au temps du semis de ladite deuxième graine au cas où ladite première vitesse de croissance soit plus élevée que ladite deuxième vitesse de croissance pour permettre aux dites premières et deuxièmes plantes de croître en même temps afin d'atteindre ladite grandeur spécifique, ou encore alternativement
le semis de ladite première graine et le semis de ladite deuxième graine étant effectués en même temps, cependant, la croissance de ladite première plante étant empêchée en mettant ladite première plante à l'abri en permanence ou de façon périodique durant le temps de la croissance, au cas où ladite première vitesse de croissance soit plus élevée que ladite deuxième vitesse de croissance, de façon à empêcher ladite première plante d'atteindre ladite grandeur spécifique, jusqu'à ce que ladite deuxième partie va atteindre ladite grandeur spécifique.

2. La méthode selon la revendication 1, ledit pot étant un pot en sphaigne pour la réalisation d'un pot de croissance faisant preuve d'aptitudes d'aération et de transfert d'humidité.

3. La méthode selon l'une quelconque des revendications 1 et 2, ladite première et/ou deuxième graine étant semée(s) dessus ledit agent de croissance, préférablement du terreau, compris dans ledit pot, et la méthode comprenant encore le stade d'application d'une couche empêchant l'évaporation d'eau, tel qu'une couche d'argile au-dessus de ladite premiere graine et/ou au-dessus de ladite deuxième graine, respectivement.

4. La méthode selon l'une quelconque des revendications 1 à 3, ladite deuxième graine étant semée par injection de ladite graine à l'intérieur de l'agent de croissance, préférablement du terreau, au moyen d'un dispositif d'injection de semaille.

5. La méthode selon l'une quelconque des revendications 1 à 4, lesdites première et deuxième plantes étant des plantes de salade ayant des feuilles de couleurs différentes, préférablement des feuilles de couleurs rouges et vertes.

6. La méthode selon l'une quelconque des revendications 1 à 4, les plantes étant sélectionnées à partir des herbes ou des produits de la terre tels que des plantes aromatiques, par exemple la salade, la ciboulette, la civette, le persil, la sauge, le basilic, le romarin, l'origan, la menthe et la citronnelle.

7. Structure de plante comprenant deux plantes ayant des feuilles entremêlées en une structure composite, ladite structure composite des plantes étant cultivée conformément à la méthode selon l'une quelconque des revendications précédentes.
